# EUROPEAN PATENT APPLICATION

(11) **EP 4 539 477 A1**
(43) Date of publication of application: **16.04.2025**
(21) Application number: 23914465.2
(22) Date of filing: 08.12.2023
(51) Int. Cl.: H04N 21/432, H04N 21/431, H04N 21/482

(54) **VIDEO PROCESSING METHOD, APPARATUS AND DEVICE, AND STORAGE MEDIUM**

(30) Priority: 05.01.2023 CN 202310014365
(71) Applicant: Beijing Zitiao Network Technology Co., Ltd., Beijing 100190 (CN)
(72) Inventor: YANG, Pei, Beijing 100028 (CN); WU, Yukun, Beijing 100028 (CN)
(74) Representative: Isarpatent
(86) International application number: PCT/CN2023/137401
(87) International publication number: WO 2024/146331

(57) **Abstract**

The present disclosure provides a video processing method, apparatus and device and a storage medium. The method comprises: firstly, a search result video collection is displayed (S101) on a search result page, wherein the search result video collection comprises a plurality of videos with a playback sequence, the search result video collection has a corresponding collection playback window on the search result page, and the collection playback window is used for playing videos in the search result video collection. Then, the first target video is played (S102) in the collection playback window when the operation of selecting the first target video in the search result video collection is received. Therefore, according to the embodiment of the present disclosure, the videos in the search result video collection can be screened on the search result page, to find a video meeting the user's demand, satisfy the users' diversified demands for the video-based interaction function, and thereby improve the users' experience.

## Description

### FIELD

The present disclosure relates to the field of data processing, and particularly to a video processing method, apparatus and device, and a storage medium.

### BACKGROUND

With the rapid development of video processing technologies, people have increasingly diversified demands for a video-based interaction function. As a result, the existence forms of videos become more and more diverse. A video collection refers to a collection form containing a plurality of videos with a playback sequence.

Therefore, how to satisfy users' diversified demands for the video-based interaction functions based on diversified video forms is an urgent technical problem to be solved at present.

### SUMMARY

To address the above technical problems, embodiments of the present disclosure provide a video processing method.

In a first aspect, the present disclosure provides a video processing method, comprising:
displaying a search result video collection on a search result page; wherein the search result video collection comprises a plurality of videos with a playback sequence, the search result video collection has a corresponding collection playback window on the search result page, and the collection playback window is used for playing videos in the search result video collection;
playing a first target video in the collection playback window in response to an operation of selecting the first target video from the search result video collection.

In an optional implementation, the playing a first target video in the collection playback window in response to an operation of selecting the first target video from the search result video collection comprises:
playing the first target video within the collection playback window in response to an operation of sliding from a currently-played video to the first target video in the search result video collection and acting on the collection playback window.

In an optional implementation, the displaying a search result video collection on a search result page comprises:
displaying the search result video collection in a preset card-stacked form on the search result page, wherein the cards in the preset card-stacked form have a correspondence relationship with videos in the search result video collection;
correspondingly, the playing the first target video within the collection playback window in response to an operation of sliding from a currently-played video to the first target video in the search result video collection and acting on the collection playback window comprises:
playing the first target video within the collection playback window in response to an operation of sliding from a card corresponding to the currently-played video to a card corresponding to the first target video in the search result video collection.

In an optional implementation, the collection playback window is provided with an episode-selecting scroll bar, and the episode-selecting scroll bar is provided with an episode-selecting control having a corresponding relationship with a video in the search result video collection; the playing a first target video in the collection playback window in response to an operation of selecting the first target video from the search result video collection comprises:
in response to a trigger operation on a first target episode-selecting control on the episode-selecting scroll bar, playing a video corresponding to the first target episode-selecting control in the collection playback window.

In an optional implementation, an episode cover page and/or an episode title are/is displayed on the episode-selecting control, and the episode-selecting control on the episode-selecting scroll bar is displayed in linage with the video in the collection playback window.

In an optional implementation, the collection playback window is provided with an episode-selecting scroll bar, and the episode-selecting scroll bar is provided with an episode-selecting control having a corresponding relationship with a video in the search result video collection; the method further comprises:
in response to a trigger operation on a second target episode-selecting control on the episode-selecting scroll bar, jumping from the search result page to a flow page in the collection, and displaying a video corresponding to the second target episode-selecting control on the flow page in the collection.

In an optional implementation, before playing a first target video in the collection playback window in response to an operation of selecting the first target video from the search result video collection, the method further comprises:
in response to a trigger operation on the episode-selecting list control corresponding to the search result video collection, displaying an episode-selecting list corresponding to the search result video collection on the search result page; wherein videos included in the search result video collection are displayed on the episode-selecting list;

Accordingly, the playing a first target video in the collection playback window in response to an operation of selecting the first target video from the search result video collection comprises:
playing the first target video within the collection playback window in response to an operation of selecting the first target video in the episode-selecting list.

In an optional implementation, the method further comprises:
in response to a trigger operation on an episode-selecting list control corresponding to the search result video collection, jumping from the search result page to a flow page in the collection, and displaying an episode-selecting list corresponding to the search result video collection on the flow page in the collection; wherein videos included in the search result video collection are displayed in the episode-selecting list;
in response to an operation of selecting a second target video in the episode-selecting list, playing the second target video on the flow page in the collection.

In an optional implementation, the method further comprises:
in response to a preset trigger operation on a third target video in the search result video collection, jumping from the search result page to the flow page in the collection, and playing the videos in the search result video collection on the flow page in the collection;
in response to a trigger operation of returning from the flow page in the collection to the search result page, determining the video being played on the flow page in the collection as a fourth target video, and after the page returns from the flow page in the collection to the search result page, playing the fourth target video in the collection playback window on the search result page.

In a second aspect, the present disclosure provides a video processing apparatus, comprising:
a first displaying module configured to display a search result video collection on a search result page; wherein the search result video collection comprises a plurality of videos with a playback sequence, the search result video collection has a corresponding collection playback window on the search result page, and the collection playback window is used for playing videos in the search result video collection;
a first playing module configured to play a first target video in the collection playback window in response to an operation of selecting the first target video from the search result video collection.

In a third aspect, the present disclosure provides a computer-readable storage medium having stored therein instructions that, when executed on a terminal device, cause the terminal device to implement the above method.

In a fourth aspect, the present disclosure provides a video processing apparatus, comprising: a memory, a processor, and a computer program stored on the memory and being executable on the processor, the computer program, when executed by the processor, implementing the above method.

In a fifth aspect, the present disclosure provides a computer program product comprising a computer program/instructions that, when executed by a processor, implement the above method.

The technical solution according to embodiments of the present disclosure at least have the following advantages as compared with the prior art:
In the video processing method according to the embodiment of the present disclosure, firstly, the search result video collection is displayed on the search result page, wherein the search result video collection comprises a plurality of videos with a playback sequence, the search result video collection has a corresponding collection playback window on the search result page, and the collection playback window is used for playing videos in the search result video collection. Then, the first target video is played in the collection playback window when the operation of selecting the first target video in the search result video collection is received. Therefore, according to the embodiment of the present disclosure, the videos in the search result video collection can be screened on the search result page, to find a video meeting the user's demand, satisfy the users' diversified demands for the video-based interaction function, and thereby improve the users' experience.

### BRIEF DESCRIPTION OF THE DRAWINGS

The drawings, which are incorporated in and constitute a part of the description, illustrate embodiments compliant with the present disclosure and, together with the description, serve to illustrate the principles of the present disclosure.

In order to illustrate the embodiments of the present disclosure or the technical solutions in the prior art more clearly, the drawings to be used in the depictions of the embodiments or the prior art will be introduced briefly. Obviously, those having ordinary skill in the art may also obtain other figures according to these figures without making inventive efforts.
FIG. 1 illustrates a flow chart of a video processing method according to an embodiment of the present disclosure;
FIG. 2 illustrates a schematic diagram of a search result page according to an embodiment of the present disclosure;
FIG. 3 illustrates a flow chart of another video processing method according to an embodiment of the present disclosure;
FIG. 4 illustrates a flow chart of a further video processing method according to an embodiment of the present disclosure;
FIG. 5 illustrates a schematic diagram of another search result page according to an embodiment of the present disclosure;
FIG. 6 illustrates a schematic diagram of a further search result page according to an embodiment of the present disclosure;
FIG. 7 illustrates a flow chart of a further video processing method according to an embodiment of the present disclosure;
FIG. 8 illustrates a schematic diagram of a further search result page according to an embodiment of the present disclosure;
FIG. 9 illustrates a block diagram of a video processing apparatus according to an embodiment of the present disclosure;
FIG. 10 illustrate a block diagram of a video processing apparatus according to an embodiment of the present disclosure.

### DETAILED DESCRIPTION OF EMBODIMENTS

The solutions of the present disclosure will be further described to make the above objects, features and advantages of the present disclosure more apparent. It needs to be appreciated that embodiments and features in the embodiments in the present disclosure may be combined with each other without conflict.

Many specific details are illustrated in the following depictions to facilitate understanding the present disclosure sufficiently, but the present disclosure may also be implemented in other manners different from those described herein; obviously, the embodiments in the description are only partial embodiments not all embodiments of the present disclosure.

In order to satisfy users' diversified demands for a video-based interaction function, embodiments of the present disclosure provide a video processing method, comprising: firstly, displaying a search result video collection on a search result page, wherein the search result video collection comprises a plurality of videos with a playback sequence, the search result video collection has a corresponding collection playback window on the search result page, and the collection playback window is used for playing videos in the search result video collection; and then, when receiving an operation of selecting a first target video from the search result video collection, playing the first target video in the collection playback window. Therefore, according to embodiments of the present disclosure, the videos in the search result video collection can be screened on the search result page, to find a video meeting the user's demand, satisfy the users' diversified demands for the video-based interaction function, and thereby improve the users' experience.

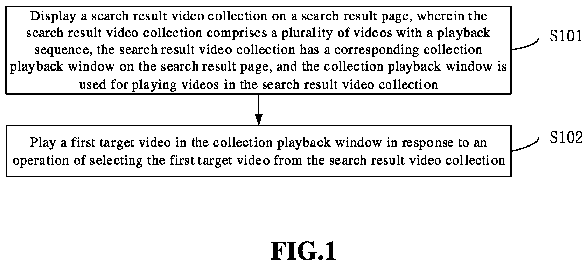

Based on this, an embodiment of the present disclosure provides a video processing method. Referring to FIG. 1, it illustrates a flow chart of a video processing method according to an embodiment of the present disclosure. The method comprises:
S101: displaying a search result video collection on a search result page.

The search result video collection comprises a plurality of videos with a playback sequence, the search result video collection has a corresponding collection playback window on the search result page, and the collection playback window is used for playing videos in the search result video collection.

In the embodiment of the present disclosure, the search result page is used to receive an input search keyword, to perform searching based on the search keyword and display a returned search result. The search result page may display a plurality of types of search results such as search result videos, search result audios, search result pictures, etc. Specifically, the search result video collection belongs to one of the plurality of types of search results. The search result video collection comprises a plurality of videos with a playback sequence, for example, the search result video collection is a TV series collection comprising N-episode TV series.

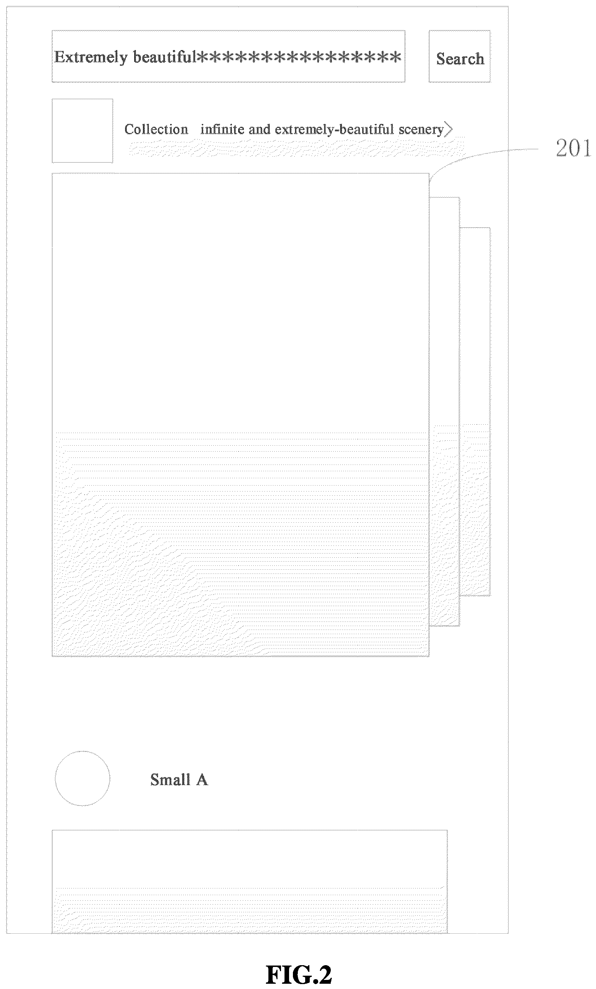

In the embodiment of the present disclosure, one or more search result video collections may be displayed on the search result page, and each search result video collection has a corresponding collection playback window on the search result page. FIG. 2 illustrates a schematic diagram of a search result page according to an embodiment of the present disclosure, wherein videos in the corresponding search result video collection are played in a collection playback window 201.

In an optional embodiment, videos in the search result video collection may be automatically played in the collection playback window in sequence according to a playing order of the videos in the corresponding search result video collection.

S102: playing a first target video in the collection playback window in response to an operation of selecting the first target video from the search result video collection.

In the embodiment of the present disclosure, during the playing of videos in the search result video collection in sequence within the corresponding collection playback window, the user may screen the search result video collection for a video of interest as the first target video. When the operation of selecting the first target video from the search result video collection is received, the first target video is played in the corresponding collection playback window, namely, a currently-played video is switched to the first target video in the collection playback window, and the first target video is played in the collection playback window.

In the embodiment of the present disclosure, the method of screening the videos in the search result video collection for the first video of interest may comprise multiple methods. In an optional implementation, the first target video is played within the collection playback window in response to an operation of sliding from a currently-played video to the first target video in the search result video collection and acting on the collection playback window. In another optional embodiment, the selection of the first target video may be achieved by selecting using an episode-selecting scroll bar or by selecting from an episode-selecting list etc. Embodiments of the present disclosure will be described in detail in the following embodiments and will not be described in detail herein.

In the video processing method according to the embodiment of the present disclosure, firstly, the search result video collection is displayed on the search result page, wherein the search result video collection comprises a plurality of videos with a playback sequence, the search result video collection has a corresponding collection playback window on the search result page, and the collection playback window is used for playing videos in the search result video collection. Then, the first target video is played in the collection playback window when the operation of selecting the first target video in the search result video collection is received. Therefore, according to the embodiment of the present disclosure, the videos in the search result video collection can be screened on the search result page, to find a video meeting the user's demand, satisfy the users' diversified demands for the video-based interaction function, and thereby improve the users' experience.

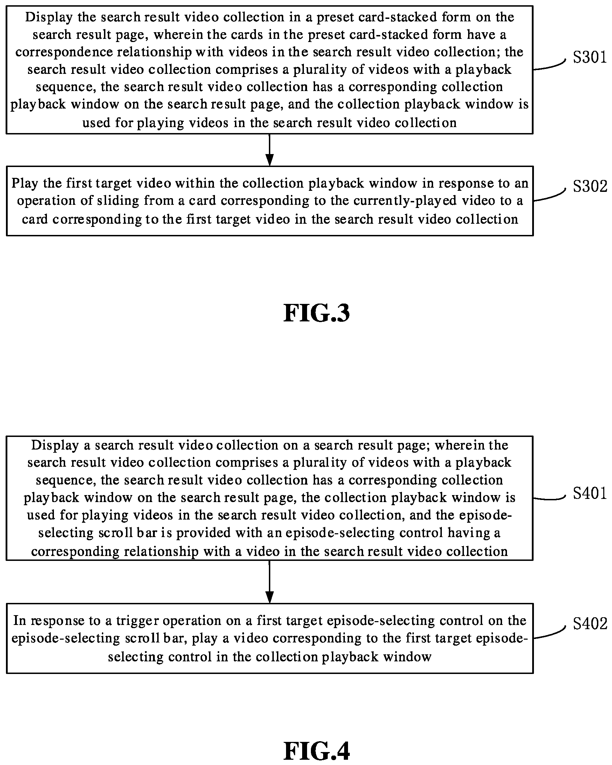

Based on the above embodiment, the present disclosure further provides a video processing method. Referring to FIG. 3, it illustrates a flow chart of another video processing method according to an embodiment of the present disclosure. Specifically, the method comprises:
S301: displaying a search result video collection in a preset card-stacked form on a search result page.

The cards in the preset card-stacked form are in a correspondence relationship with videos in the search result video collection, the search result video collection comprises a plurality of videos with a playback sequence, the search result video collection has a corresponding collection playback window on the search result page, and the collection playback window is used for playing the videos in the search result video collection.

As shown in the above FIG. 2, videos in the search result video collection are displayed in the collection playback window on the search result page in the preset card-stacked form. Specifically, the preset card-stacked form may comprise a plurality of cards, for example, may comprise 3 cards, and the plurality of cards correspond to the plurality of videos in an adjacent playing order in the search result video collection. Assuming that video A in the search result video collection is played on the card located on the uppermost layer in the collection playback window, and video B in the search result video collection is played on the card located on the adjacent lower layer, video A is played in the search result video collection earlier than video B.

In the embodiments of the present disclosure, the videos in the search result video collection displayed in the preset card-stacked form may support a sliding operation. In an optional implementation, the user may trigger the videos displayed in the preset card-stacked form on the collection playback window to achieve a page-turning display effect by a leftward sliding operation or a rightward sliding operation (the leftward sliding corresponds to "a previous video", and the rightward sliding corresponds to "a next video") acting on the collection playback window. The page-turning display effect can enable the user to screen the search result video collection to find the video of interest, and play the video of the user's interest within the collection playback window.

In an optional implementation, a preset prompt message, such as "slide leftward to view more", may be displayed in the collection playback window to prompt the user to trigger a sliding operation to screen the search result video collection to find the video of interest.

S302: playing the first target video within the collection playback window in response to an operation of sliding from a card corresponding to the currently-played video to a card corresponding to the first target video in the search result video collection.

In the embodiment of the present disclosure, during the playing of the videos in the search result video collection in the collection playback window, if a user-triggered operation of sliding from the card corresponding to the currently-played video to the card corresponding to the first target video is received, the first target video is played in the collection playback window, thereby realizing the effect of switching the playing of the current video to playing the first target video, so that the user can screen the search result video collection on the search result page to find the video of interest.

In addition, if a preset operation triggered by the user on the first target video being played in the collection playback window is received, the search result page jumps to a flow page in the collection, and the videos in the search result video collection are played on the flow page in the collection. The preset operation may be a click operation on the collection playback window, etc.

In an optional implementation, when it is determined that the first target video is the final video according to the playing order in the search result video collection, a prompt message "slide to view more" may be displayed after sliding to the final position to prompt the user to continue triggering the sliding operation to enter the flow page in the collection; if the user does not continue triggering the sliding operation, the last video may always be played repeatedly in the collection playback window.

In the video processing method according to the embodiment of the present disclosure, the videos in the search result video collection are displayed in the preset card-stacked form on the search result page; the first target video is played within the collection playback window in response to receiving an operation of sliding from the card corresponding to the currently-played video to the card corresponding to the first target video in the search result video collection. It can be seen that according to the embodiment of the present disclosure, the function of screening the search result video collection for the video of interest may be achieved on the search result page by means of the video page-turning displaying effect in the card-stacked form, and the user's experience may be improved.

Based on the above embodiment, the present disclosure further provides a video processing method. Referring to FIG. 4, it illustrates a flow chart of a further video processing method according to an embodiment of the present disclosure. Specifically, the method comprises:
S401: displaying a search result video collection on a search result page.

The search result video collection comprises a plurality of videos with a playback sequence, the search result video collection has a corresponding collection playback window on the search result page, the collection playback window is used for playing the videos in the search result video collection, and the episode-selecting scroll bar is provided with an episode-selecting control having a correspondence relationship with the videos in the search result video collection.

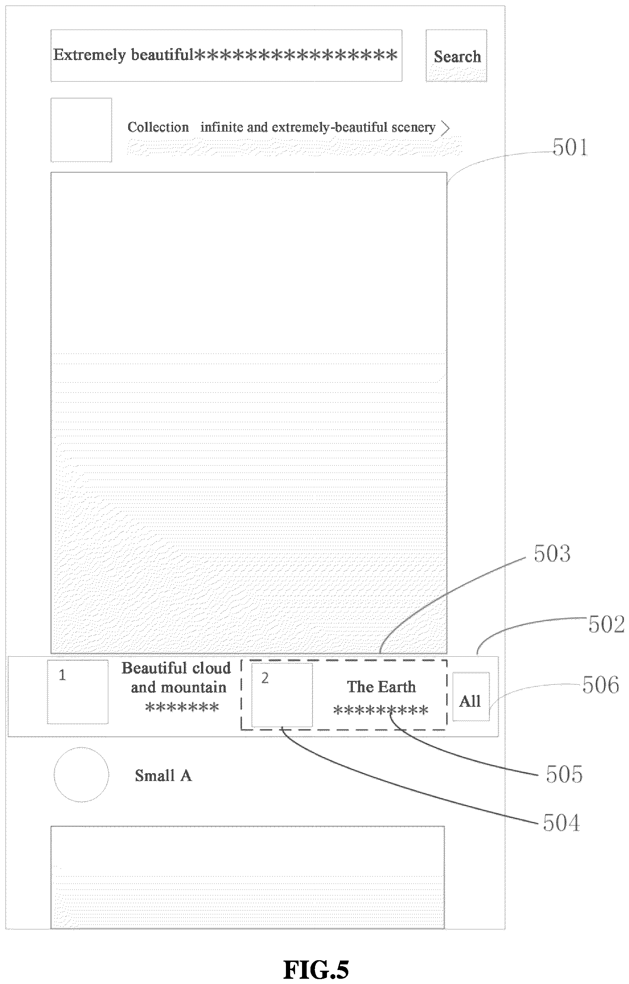

As shown in FIG. 5, it illustrates a schematic diagram of another search result page according to an embodiment of the present disclosure, wherein an episode-selecting scroll bar 502 is provided on a collection playback window 501, and an episode-selecting control 503 having a correspondence relationship with the videos in the search result video collection is provided on the episode-selecting scroll bar. As shown in FIG. 5, the episode-selecting control 503 has a correspondence relationship with a second-episode video in the search result video collection and is used for triggering the second-episode video in the search result video collection to be played in the collection playback window 501. In addition, by a sliding operation on the episode-selecting scroll bar 502, the episode-selecting scroll bar 502 can be slid, and the episode-selecting control displayed on the episode-selecting scroll bar 502 can be updated. For example, by a leftward sliding operation on the episode-selecting scroll bar 502, the episode-selecting scroll bar 502 can be slid to the left, and the episode-selecting control displayed on the episode-selecting scroll bar 502 can be updated and displayed from the episode-selecting control corresponding to the second-episode video to the episode-selecting control corresponding to the fourth-episode video.

In an optional implementation, an episode cover page and/or an episode title are/is displayed on the episode-selecting control on the episode-selecting scroll bar. The episode cover page may be a cover image of a corresponding to-be-selected video, for example, the episode cover page 504 in FIG. 5 is a cover image of the second-episode video. The episode title is used for describing the content of the corresponding to-be-selected video, for example, the episode title 505 in FIG. 5 is the episode title "infinite scenery with beautiful cloud and mountain" of the second-episode video.

In the embodiment of the present disclosure, the episode-selecting control on the episode-selecting scroll bar is displayed in linage with the video in the collection playback window. As shown in FIG. 5, during the play of the second-episode video in the collection playback window 501, the episode-selecting control corresponding to the second-episode video is displayed in linkage on the episode-selecting scroll bar 502, so that the user can know the episode subject and/or episode cover page of the video being viewed in the process of viewing the second-episode video.

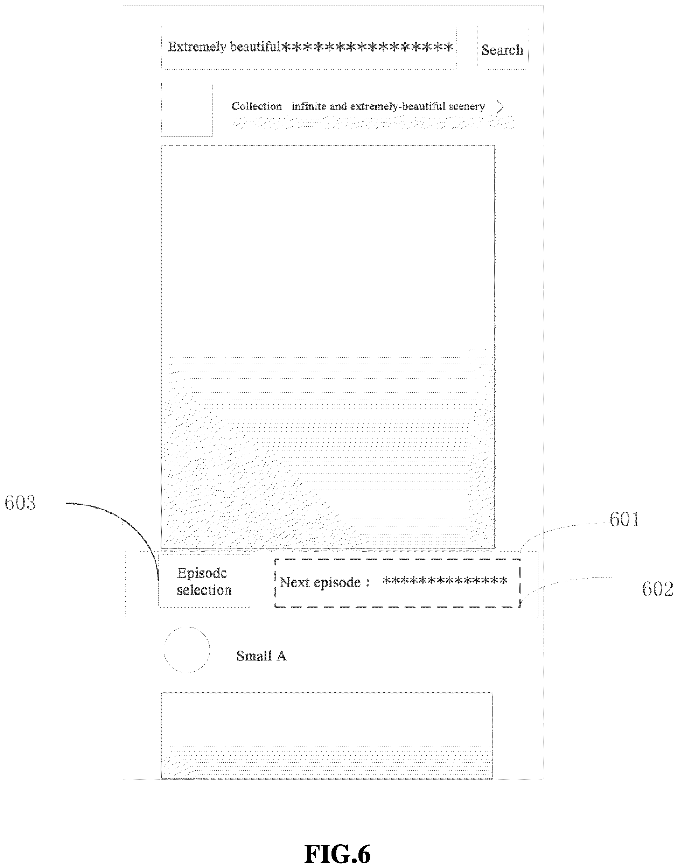

As shown in FIG. 6, it illustrates a schematic diagram of a further search result page according to an embodiment of the present disclosure, wherein an episode-selecting control 602 on an episode-selecting scroll bar 601 may be a "next episode" control, and an episode cover page and/or episode subject may also be displayed on the episode-selecting control 602, to prompt the user about the content of the subject and cover page of the next-episode video for reference by the user in screening.

S402: in response to a trigger operation on a first target episode-selecting control on the episode-selecting scroll bar, playing a video corresponding to the first target episode-selecting control within the collection playback window.

In an embodiment of the present disclosure, one or more episode-selecting controls may be displayed on the episode-selecting scroll bar corresponding to the search result video collection; when a trigger operation on the first target episode-selecting control on the episode-selecting scroll bar is received, a video corresponding to the first target episode-selecting control is played in the collection playback window. The first target episode-selecting control may be any one of one or more episode-selecting controls that may be displayed on the episode-selecting scroll bar. The trigger operation on the first target episode-selecting control may include a click operation, a long-press operation, etc. on the first target episode-selecting control.

In another optional implementation, when a trigger operation on a second target episode-selecting control on the episode-selecting scroll bar is received, the search result page may also jump to a flow page in the collection, and a video corresponding to the second target episode-selecting control is displayed on the flow page in the collection, namely, the page transitions from the search result page to the flow page in the collection, and the video in the search result video collection is played based on the flow page in the collection. The second target episode-selecting control is any episode-selecting control on the episode-selecting scroll bar, and the second target episode-selecting control and the first target episode-selecting control may be the same episode-selecting control or different episode-selecting controls.

In the video processing method according to the embodiment of the present disclosure, the search result video collection is displayed on the search result page, the collection playback window corresponding to the search result video collection is provided with the episode-selecting scroll bar, and the episode-selecting control having a correspondence relationship with the video in the search result video collection is provided on the episode-selecting scroll bar. When the trigger operation on the first target episode-selecting control on the episode-selecting scroll bar is received, the first target video is played within the collection playback window. It can be seen that according to the embodiment of the present disclosure, the function of screening the search result video collection for the video of interest may be achieved on the search result page by using the episode-selecting scroll bar, and the user's experience may be improved.

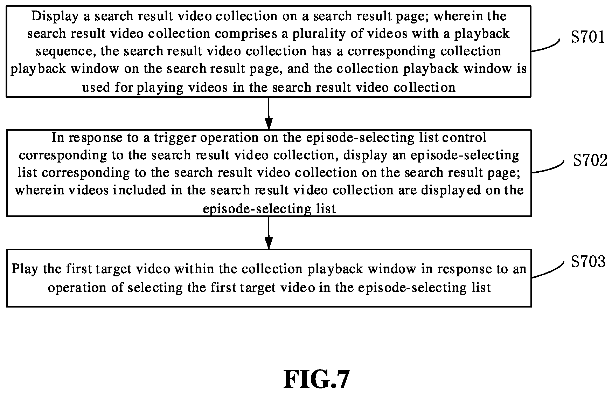

Based on the above embodiment, the present disclosure further provides a video processing method. Referring to FIG. 7, it illustrates a flow chart of a further video processing method according to an embodiment of the present disclosure. Specifically, the method comprises:
S701: displaying a search result video collection on a search result page.

The search result video collection comprises a plurality of videos with a playback sequence, the search result video collection has a corresponding collection playback window on the search result page, and the collection playback window is used for playing the videos in the search result video collection.

In an embodiment of the present disclosure, the collection playback window is provided with an episode-selecting list control corresponding to the search result video collection, the episode-selecting list control is used for triggering and displaying the episode-selecting list corresponding to the search result video collection, and the episode-selecting list comprises videos in the search result video collection.

S702: displaying the episode-selecting list corresponding to the search result video collection on the search result page in response to a trigger operation on the episode-selecting list control corresponding to the search result video collection.

Videos included in the search result video collection are shown on the episode-selecting list.

In an optional implementation, the episode-selecting list control corresponding to the search result video collection may be an "all" control 506 as shown in FIG. 5; when a trigger operation on the "all" control 506 is received, the episode-selecting list corresponding to the search result video collection is displayed on the search result page, so that the user can screen the search result video collection based on the episode-selecting list to find the video of interest.

In another optional implementation, the episode-selecting list control corresponding to the search result video collection may be an "episode selection" control 603 as shown in FIG. 6. When a trigger operation on the "episode selection" control 603 is received, the episode-selecting list corresponding to the search result video collection is displayed on the search result page, so that the user can screen the search result video collection based on the episode-selecting list to find the video of interest.

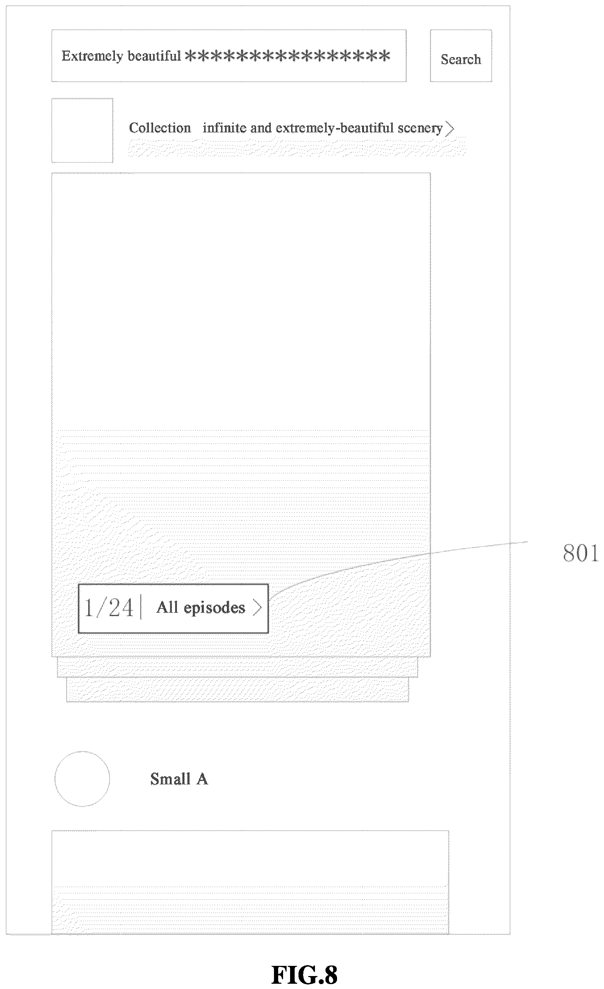

In yet another optional implementation, as shown in FIG. 8, it illustrates a schematic diagram of a further search result page according to an embodiment of the present disclosure, wherein "all episodes" control 801 is provided on the collection playback window, and meanwhile, the serial number of the episode of the video in the corresponding search result video collection corresponding to the video being played in the collection playback window may also be displayed on the "all episodes" control 801, to prompt the user.

S703: playing a first target video within the collection playback window in response to an operation of selecting the first target video from the episode-selecting list.

In an embodiment of the present disclosure, when the operation of selecting the first target video from the episode-selecting list displayed on the search result page is received, the first target video is played within the collection playback window.

In an optional implementation, when the trigger operation on the episode-selecting list control corresponding to the search result video collection is received, the page may jump from the search result page a flow page in the collection, and the episode-selecting list corresponding to the search result video collection may be displayed on the flow page in the collection. When an operation of selecting a second target video in the episode-selecting list is received, the second target video is displayed on the flow page in the collection, i.e., the videos in the search result video collection are played based on the flow page in the collection.

In the video processing method according to the embodiment of the present disclosure, the search result video collection is displayed on the search result page; the episode-selecting list corresponding to the search result video collection is displayed on the search result page when the trigger operation on the episode-selecting list control corresponding to the search result video collection is received; thus, when the operation of selecting a first target video from the episode-selecting list, the first target video is played within the collection playback window. It can be seen that according to the embodiment of the present disclosure, the function of screening the search result video collection for the video of interest may be achieved on the search result page in the episode-selecting list manner, and the user's experience may be improved.

Based on the above embodiments, in an optional implementation, when a preset trigger operation on a third target video in the search result video collection is received, the page jumps from the search result page to the flow page in the collection, and the videos in the search result video collection are played on the flow page in the collection. When a trigger operation of returning from the flow page in the collection to the search result page is received, the video being played on the flow page in the collection may be determined as the fourth target video. After the page returns from the flow page in the collection to the search result page, the fourth target video is played in the collection playback window on the search result page.

It can be seen that according to the embodiments of the present disclosure, when the page returns from the flow page in the collection to the search result page, a video consistent with the flow page in the collection is played on the search result page, and the user's experience in use is improved.

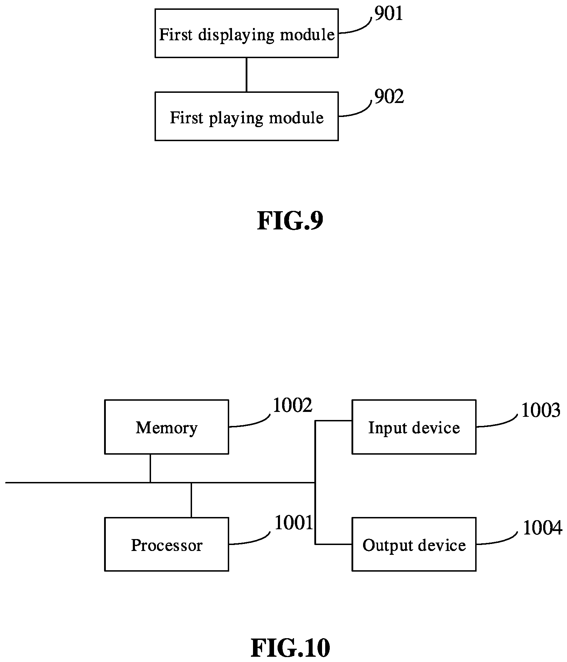

Based on the above method embodiments, the present disclosure further provides a video processing apparatus. Referring to FIG. 9, it illustrates a block diagram of a video processing apparatus according to an embodiment of the present disclosure. The apparatus comprises:
a first displaying module 901 configured to display a search result video collection on a search result page; wherein the search result video collection comprises a plurality of videos with a playback sequence, the search result video collection has a corresponding collection playback window on the search result page, and the collection playback window is used for playing videos in the search result video collection;
a first playing module 902 configured to play a first target video in the collection playback window in response to an operation of selecting the first target video from the search result video collection.

In an optional implementation, the first playing module comprises:
a first playing submodule configured to play the first target video within the collection playback window in response to an operation of sliding from a currently-played video to the first target video in the search result video collection and acting on the collection playback window.

In an optional implementation, the first displaying module comprises:
a first displaying submodule configured to display the search result video collection in a preset card-stacked form on the search result page, wherein the cards in the preset card-stacked form have a correspondence relationship with videos in the search result video collection;
correspondingly, the first playing submodule is specifically configured to play the first target video within the collection playback window in response to an operation of sliding from a card corresponding to the currently-played video to a card corresponding to the first target video in the search result video collection.

In an optional implementation, the collection playback window is provided with an episode-selecting scroll bar, and the episode-selecting scroll bar is provided with an episode-selecting control having a corresponding relationship with a video in the search result video collection; the first playing module comprises:
a second playing submodule configured to, in response to a trigger operation on a first target episode-selecting control on the episode-selecting scroll bar, play a video corresponding to the first target episode-selecting control in the collection playback window.

In an optional implementation, an episode cover page and/or an episode title are/is displayed on the episode-selecting control, and the episode-selecting control on the episode-selecting scroll bar is displayed in linage with the video in the collection playback window.

In an optional implementation, the collection playback window is provided with an episode-selecting scroll bar, and the episode-selecting scroll bar is provided with an episode-selecting control having a corresponding relationship with a video in the search result video collection; the apparatus further comprises:
a second displaying module configured to, in response to a trigger operation on a second target episode-selecting control on the episode-selecting scroll bar, jump from the search result page to a flow page in the collection, and display a video corresponding to the second target episode-selecting control on the flow page in the collection.

In an optional implementation, the apparatus further comprises:
a third displaying module configured to, in response to a trigger operation on the episode-selecting list control corresponding to the search result video collection, display an episode-selecting list corresponding to the search result video collection on the search result page; wherein videos included in the search result video collection are displayed on the episode-selecting list;

Accordingly, said first playing module comprises:
a third playing submodule configured to play the first target video within the collection playback window in response to an operation of selecting the first target video in the episode-selecting list.

In an optional implementation, the apparatus further comprises:
a fourth displaying module configured to, in response to a trigger operation on an episode-selecting list control corresponding to the search result video collection, jump from the search result page to a flow page in the collection, and display an episode-selecting list corresponding to the search result video collection on the flow page in the collection; wherein videos included in the search result video collection are displayed in the episode-selecting list;
a second playing module configured to, in response to an operation of selecting a second target video in the episode-selecting list, play the second target video on the flow page in the collection.

In an optional implementation, the apparatus further comprises:
a third playing module configured to, in response to a preset trigger operation on a third target video in the search result video collection, jump from the search result page to the flow page in the collection, and play the videos in the search result video collection on the flow page in the collection;
a fourth playing module configured to, in response to a trigger operation of returning from the flow page in the collection to the search result page, determine the video being played on the flow page in the collection as a fourth target video, and after the page returns from the flow page in the collection to the search result page, play the fourth target video in the collection playback window on the search result page.

In the video processing apparatus according to the embodiment of the present disclosure, firstly, the search result video collection is displayed on the search result page, wherein the search result video collection comprises a plurality of videos with a playback sequence, the search result video collection has a corresponding collection playback window on the search result page, and the collection playback window is used for playing videos in the search result video collection. Then, the first target video is played in the collection playback window when the operation of selecting the first target video in the search result video collection is received. Therefore, according to the embodiment of the present disclosure, the videos in the search result video collection can be screened on the search result page, to find a video meeting the user's demand, satisfy the users' diversified demands for the video-based interaction function, and thereby improve the users' experience.

In addition to the methods and apparatus described above, an embodiment of the present disclosure further provides a computer-readable storage medium having stored therein instructions that, when executed on a terminal device, cause the terminal device to implement the video processing method according to embodiments of the present disclosure.

An embodiment of the present disclosure further provides a computer program product comprising a computer program/instructions that, when executed by a processor, implement the video processing method according to embodiments of the present disclosure.

In addition, an embodiment of the present disclosure further provides a video processing apparatus, which may comprise the following as shown in FIG. 10:
a processor 1001, a memory 1002, an input device 1003 and an output device 1004. The number of processors 1001 in the video processing apparatus may be one or more, one processor being exemplified in FIG. 10. In some embodiments of the present disclosure, the processor 1001, the memory 1002, the input device 1003 and the output device 1004 may be connected via a bus or otherwise, where the connection via a bus is exemplified in FIG. 10.

The memory 1002 may be used to store a software program and modules, and the processor 1001 performs various functional applications and data processing of the video processing apparatus by running the software program and modules stored in the memory 1002. The memory 1002 may mainly comprise a program storage area and a data storage area, wherein the program storage area may store an operating system, an application needed by at least one function etc. Additionally, the memory 1002 may comprise a high-speed random access memory and may also comprise non-volatile memory, such as at least one magnetic disk storage device, a flash memory device, or other volatile solid-state storage device. The input device 1003 may be used to receive input numeric or character information and to generate signal input related to user settings and functional control of the video processing apparatus.

Specifically, in the present embodiment, the processor 1001 loads executable files corresponding to processes of one or more applications into the memory 1002 according to the following instructions, and the processor 1001 runs the applications stored in the memory 1002, thereby realizing various functions of the above-mentioned video processing apparatus.

It is noted that relational terms in the text such as "first", "second" and the like may be used only to distinguish one entity or operation from another entity or operation without necessarily requiring or implying any such actual relationship or order between these entities or operations herein. Furthermore, the terms "comprise", "contain" or any other variation thereof, are intended to cover a non-exclusive inclusion, such that a process, method, article, or apparatus that comprises a series of elements not only includes those elements but also includes other elements not expressly listed or elements inherent to such process, method, article, or apparatus. An element limited by the sentence "comprise a . . ." does not, without more constraints, exclude the existence of additional identical elements in the process, method, article, or apparatus that comprises the element.

What are described above are only specific implementations of the present disclosure to enable those skilled in the art to understand or implement the present disclosure. Various modifications to these embodiments are apparent to those skilled in the art, and the general principles defined herein may be implemented in other embodiments without departing from the scope of the present disclosure. Thus, the present disclosure is not intended to be limited to the embodiments described herein but to comply with the broadest scope consistent with the principles and novel features disclosed herein.

## Claims

1. A video processing method, wherein the method comprises:
displaying (S101) a search result video collection on a search result page, wherein the search result video collection comprises a plurality of videos with a playback sequence, the search result video collection has a corresponding collection playback window on the search result page, and the collection playback window is used for playing videos in the search result video collection; and
playing (S102) a first target video in the collection playback window in response to an operation of selecting the first target video from the search result video collection.

2. The method according to claim 1, wherein playing (S102) the first target video in the collection playback window in response to an operation of selecting the first target video from the search result video collection comprises:
playing the first target video within the collection playback window in response to an operation of sliding from a currently-played video to the first target video in the search result video collection and acting on the collection playback window.

3. The method according to claim 2, wherein displaying (S101) a search result video collection on a search result page comprises:
displaying the search result video collection in a preset card-stacked form on the search result page, wherein the cards in the preset card-stacked form have a correspondence relationship with videos in the search result video collection,
wherein playing the first target video within the collection playback window in response to an operation of sliding from a currently-played video to the first target video in the search result video collection and acting on the collection playback window comprises:
playing the first target video within the collection playback window in response to an operation of sliding from a card corresponding to the currently-played video to a card corresponding to the first target video in the search result video collection.

4. The method according to claim 1, wherein the collection playback window is provided with an episode-selecting scroll bar, and the episode-selecting scroll bar is provided with an episode-selecting control having a corresponding relationship with a video in the search result video collection, playing a first target video in the collection playback window in response to an operation of selecting the first target video from the search result video collection comprises:
in response to a trigger operation on a first target episode-selecting control on the episode-selecting scroll bar, playing a video corresponding to the first target episode-selecting control in the collection playback window.

5. The method according to claim 4, wherein an episode cover page and/or an episode title are/is displayed on the episode-selecting control, and the episode-selecting control on the episode-selecting scroll bar is displayed in linage with the video in the collection playback window.

6. The method according to claim 1, wherein the collection playback window is provided with an episode-selecting scroll bar, and the episode-selecting scroll bar is provided with an episode-selecting control having a corresponding relationship with a video in the search result video collection, the method further comprises:
in response to a trigger operation on a second target episode-selecting control on the episode-selecting scroll bar, jumping from the search result page to a flow page in the collection, and displaying a video corresponding to the second target episode-selecting control on the flow page in the collection.

7. The method according to claim 1, wherein before playing a first target video in the collection playback window in response to an operation of selecting the first target video from the search result video collection, the method further comprises:
in response to a trigger operation on the episode-selecting list control corresponding to the search result video collection, displaying an episode-selecting list corresponding to the search result video collection on the search result page, wherein videos included in the search result video collection are displayed on the episode-selecting list,
wherein playing a first target video in the collection playback window in response to an operation of selecting the first target video from the search result video collection comprises:
playing the first target video within the collection playback window in response to an operation of selecting the first target video in the episode-selecting list.

8. The method according to claim 1, wherein the method further comprises:
in response to a trigger operation on an episode-selecting list control corresponding to the search result video collection, jumping from the search result page to a flow page in the collection, and displaying an episode-selecting list corresponding to the search result video collection on the flow page in the collection, wherein videos included in the search result video collection are displayed in the episode-selecting list; and
in response to an operation of selecting a second target video in the episode-selecting list, playing the second target video on the flow page in the collection.

9. The method according to claim 1, wherein the method further comprises:
in response to a preset trigger operation on a third target video in the search result video collection, jumping from the search result page to the flow page in the collection, and playing the videos in the search result video collection on the flow page in the collection; and
in response to a trigger operation of returning from the flow page in the collection to the search result page, determining the video being played on the flow page in the collection as a fourth target video, and after the page returns from the flow page in the collection to the search result page, playing the fourth target video in the collection playback window on the search result page.

10. A video processing apparatus, wherein the apparatus comprises:
a first displaying module configured to display a search result video collection on a search result page; wherein the search result video collection comprises a plurality of videos with a playback sequence, the search result video collection has a corresponding collection playback window on the search result page, and the collection playback window is used for playing videos in the search result video collection; and
a first playing module configured to play a first target video in the collection playback window in response to an operation of selecting the first target video from the search result video collection.

11. A computer-readable storage medium, wherein the computer-readable storage medium has instructions stored therein that, when executed on a terminal device, causing the terminal device to implement the method according to any of claims 1-9.

12. A video processing apparatus, comprising: a memory, a processor, and a computer program stored on the memory and being executable on the processor, the computer program, when executed by the processor, implementing the method according to any of claims 1-9.
